# FASCICULE DE BREVET EUROPEEN

(11) **EP 3 279 077 B1**
(45) Date de publication et mention de la délivrance du brevet: **24.06.2020**
(21) Numéro de dépôt: 17185147.0
(22) Date de dépôt: 07.08.2017
(51) Int. Cl.: B63B 27/16, B63B 27/36, B60P 1/44, B63B 29/02

(54) **DISPOSITIF DE CONTROLE POUR VAISSEAU ET PROCEDE DE FABRICATION ASSOCIE**
KONTROLLVORRICHTUNG FÜR SCHIFF, UND ENTSPRECHENDES HERSTELLUNGSVERFAHREN
CONTROL DEVICE FOR VESSEL AND ASSOCIATED MANUFACTURING METHOD

(30) Priorité: 05.08.2016 FR 1657590
(43) Date de publication de la demande: 07.02.2018
(73) Titulaire: Tenderlift SAS, 66140 Canet Plage (FR)
(72) Inventeur: VALDELIEVRE, Maxence, 66570 SAINT NAZAIRE (FR); ZOONENS, Alain, 66140 CANET PLAGE (FR)
(74) Mandataire: Rhein, Alain

(56) Documents cités:
- FR-A1- 2 867 446
- FR-A1- 2 931 448

## Description

La présente invention concerne un dispositif de contrôle pour vaisseau, en particulier pour un vaisseau nautique tel qu'un catamaran. Le dispositif de contrôle permet en particulier d'élever ou d'abaisser une plateforme en la maintenant sensiblement horizontale.

Dans ce domaine, la demanderesse a réalisé un dispositif de contrôle pour vaisseau configuré pour élever ou abaisser une plateforme et objet du brevet FR 2 931 448 B1.

En particulier, le brevet porte sur un agencement spécifique basé notamment sur un bras coudé comprenant un vérin hydraulique, et une bielle fixée à la tige du vérin hydraulique, la bielle et le bras coudé étant articulés sur la plateforme. En outre, le bras coudé est articulé sur une structure de vaisseau, et est associé à un moyen de transmission d'effort monté sur la structure du vaisseau et sur le bras coudé.

Pour maintenir la plateforme horizontale, ce brevet identifie une première distance particulière entre les points d'articulation de la bielle et du bras coudé sur une branche verticale de la plateforme, qui par construction est la moitié d'une deuxième distance particulière entre le point d'articulation du bras coudé sur la structure horizontale et le point de fixation du moyen de transmission d'effort dans la configuration spécifique du dispositif décrit.

L'inconvénient de ce type de configuration est que dans la construction du dispositif, il y a une contrainte de tailles des éléments du dispositif, et il n'est pas possible de s'adapter à un encombrement vertical spécifique de la plateforme ou un encombrement horizontal spécifique du bras coudé.

Ainsi, la demanderesse a réalisé de tels dispositifs avec cette contrainte de distances particulière. En effet, par construction, on est contraint d'agrandir ou de réduire de la même manière les éléments du dispositif.

Un objectif de la présente invention est de proposer un dispositif et un procédé de fabrication avec moins de contraintes en ce qui concerne les tailles de la plateforme et du bras coudé.

Pour atteindre cet objectif, l'invention propose un vaisseau comprenant un dispositif de contrôle pour vaisseau, configuré pour déplacer verticalement une plateforme portant une charge, de préférence une embarcation, en maintenant la plateforme sensiblement horizontale, le dispositif comprenant
- au moins un bras de soutien comprenant un premier point d'articulation configuré pour être articulé sur une structure allongée du vaisseau,
- un vérin à tige d'extension associé à ou logé dans ledit bras de soutien en étant solidaire de celui-ci,
- au moins un moyen souple de transmission d'effort de traction fixé sur un premier point d'attache de la structure allongée à une première distance donnée du premier point d'articulation, le moyen souple de transmission rejoignant une première poulie fixée sur ledit bras de soutien, et au moins une deuxième poulie fixée sur la tige d'extension du vérin, le moyen souple de transmission étant fixé à un deuxième point d'attache solidaire du bras de soutien,
- une bielle allongée fixée sur la tige du vérin,
- une nacelle supportant la plateforme et comprenant une branche horizontale et au moins une branche de projection s'étendant de manière non-parallèle à la branche horizontale,
la nacelle étant articulée d'une part sur le bras de soutien en un deuxième point d'articulation à une portion supérieure de ladite branche de projection, et d'autre part sur la bielle allongée en un troisième point d'articulation à une portion inférieure de ladite branche de projection,
le troisième point d'articulation étant à une deuxième distance donnée du deuxième point d'articulation.

Selon l'invention, le dispositif est configuré de sorte qu'un rapport de proportionnalité de la première distance donnée séparant le premier point d'attache et le premier point d'articulation, sur la deuxième distance donnée séparant les deuxième et troisième points d'articulation, est un entier naturel non-nul qui est supérieur à 2.

Avantageusement, le dispositif est réalisé avec moins de contraintes car une plus grande variété de bras de soutien et de plateformes peut être utilisée dès lors que le rapport de proportionnalité requis est respecté. Ainsi des dispositifs avec un bras de soutien plus long peuvent être réalisés sans nécessairement agrandir l'encombrement vertical de la plateforme mais plutôt en le diminuant.

Selon d'autres aspects pris isolément ou combinés selon toutes les combinaisons techniquement réalisables :
- le rapport de proportionnalité est de 3 ou 4 ; et/ou
- le moyen souple de transmission d'effort est une corde de mouflage ; et/ou
- un deuxième rapport de la longueur de débattement du moyen souple sur la longueur du corps du vérin est sensiblement le même rapport de proportionnalité qu'entre les première et deuxième distances.

Un autre objet de l'invention concerne un procédé de fabrication d'un dispositif de contrôle selon l'invention.
En particulier, l'invention concerne un procédé de fabrication d'un dispositif pour vaisseau, configuré pour déplacer verticalement une plateforme portant une charge, de préférence une embarcation, en maintenant la plateforme sensiblement horizontale, le procédé comprenant des étapes pour :
- monter au moins un bras de soutien comprenant un premier point d'articulation de sorte que le premier point d'articulation est articulé sur une structure allongée du vaisseau,
- monter un vérin à tige d'extension de sorte qu'il est associé à ou logé dans ledit bras de soutien en étant solidaire de celui-ci,
- monter au moins un moyen souple de transmission d'effort de traction fixé sur un premier point d'attache de la structure allongée à une première distance donnée du premier point d'articulation,
tendre le moyen souple de transmission de sorte qu'il rejoint une première poulie fixée sur ledit bras de soutien, et au moins une deuxième poulie fixée sur la tige d'extension du vérin, et
fixer le moyen souple de transmission à un deuxième point d'attache solidaire du bras de soutien,
- fixer une bielle allongée sur la tige du vérin,
- monter une nacelle supportant la plateforme et comprenant une branche horizontale et au moins une branche de projection s'étendant de manière non-parallèle à la branche horizontale,
de sorte que la nacelle est articulée d'une part sur le bras de soutien en un deuxième point d'articulation à une portion supérieure de ladite branche de projection, et d'autre part sur la bielle allongée en un troisième point d'articulation à une portion inférieure de ladite branche de projection,
le troisième point d'articulation étant à une deuxième distance donnée du deuxième point d'articulation,
caractérisé en ce que le bras de soutien, le vérin et la nacelle, de préférence la branche de projection, sont sélectionnés de sorte qu'un rapport de proportionnalité de la première distance donnée séparant le premier point d'attache et le premier point d'articulation, sur la deuxième distance donnée séparant les deuxième et troisième points d'articulation, est supérieur à 1 et, de préférence, différent de 2.

L'invention sera davantage détaillée par la description de modes de réalisation non limitatifs, et sur la base des figures annexées, dans lesquelles :
- la figure 1 est une vue d'ensemble d'un dispositif selon un mode de réalisation préféré de l'invention ;
- les figures 2A et 2B sont des vues en plan d'un dispositif selon une première variante de l'invention, où la plateforme est en position haute puis en position basse et de préférence légèrement inclinée vers l'arrière ; et
- les figures 3A et 3B sont des vues en plan d'un dispositif selon une deuxième variante de l'invention, où le rapport de proportionnalité est de 3 ;

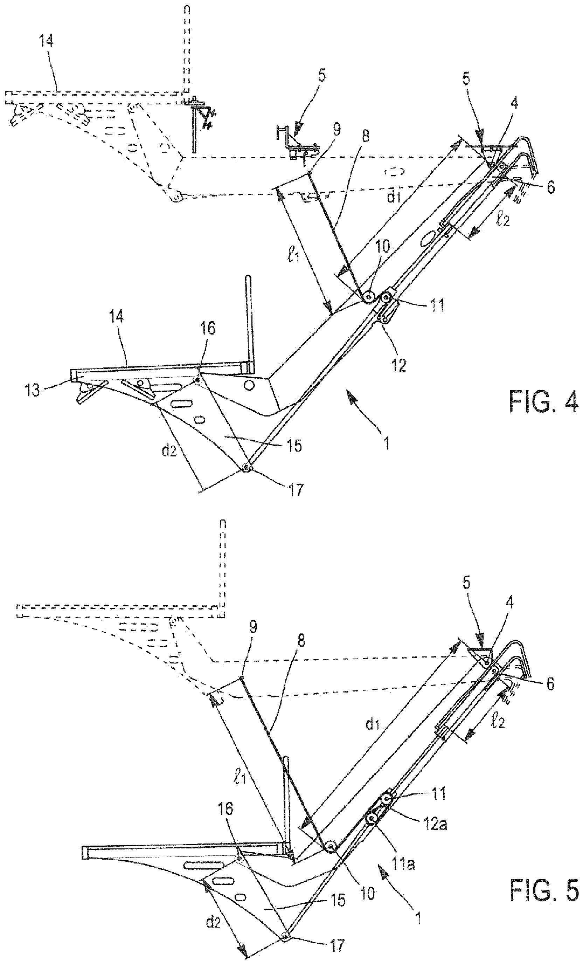

- la figure 4 est une vue en plan d'un dispositif selon une troisième variante, où le rapport de proportionnalité et le deuxième rapport sont de 2.
- la figure 5 est une vue en plan d'un dispositif selon une quatrième variante, où le rapport de proportionnalité et le deuxième rapport sont de 3.

L'invention porte sur un dispositif de contrôle 1 pour vaisseau 2, en particulier de vaisseau nautique tel qu'un catamaran de haute mer.

Le dispositif de contrôle 1 est configuré pour déplacer verticalement une plateforme portant une charge en maintenant la plateforme sensiblement horizontale.

En particulier, la charge est de préférence une embarcation telle qu'une embarcation de catamaran de haute mer. Ce type d'embarcation de catamaran est généralement fixé à l'arrière du catamaran.

Ainsi, on peut définir sur les figures, un côté arrière à gauche et un côté avant à droite.

Le dispositif de contrôle 2 comprend au moins un bras de soutien 3 comprenant un premier point d'articulation 4 configuré pour être articulé sur une structure allongée 5 du vaisseau 2. En particulier, le premier point d'articulation 4 est disposé à l'avant du bras de soutien 3, et à l'avant de la structure allongée 5.

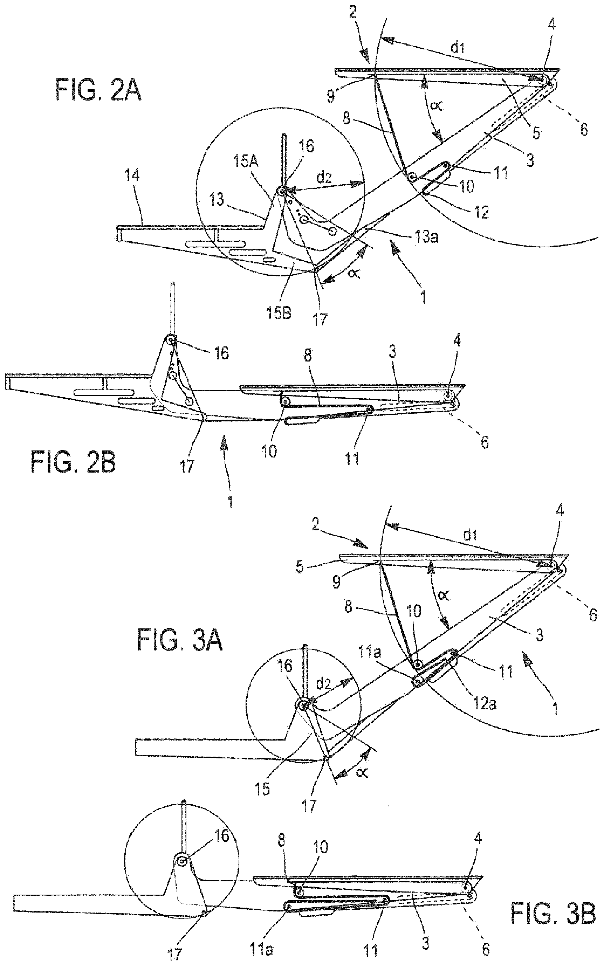

Le dispositif de contrôle peut comprendre un ou plusieurs, de préférence deux bras de soutien 3 articulé (s) sur une ou plusieurs structure(s) allongée(s). Selon le cas, les largeurs de bras de soutien 3 et/ou de structure allongé sont adaptées en référence à une direction perpendiculaire au plan de l'articulation, en particulier dans une direction perpendiculaire au plan de la figure 2A. Le bras de soutien 3 est de préférence coudé par exemple au niveau de son extrémité arrière, de sorte que l'extrémité arrière est orientée vers le haut.

Le dispositif de contrôle comprend en outre un vérin 6 associé à ou logé dans ledit bras de soutien 3 en étant solidaire de celui-ci. Le vérin 6 est de préférence un vérin hydraulique. Le vérin comprend une tige d'extension 7. En particulier, le vérin 6 est allongé et monté sensiblement parallèlement au le bras de soutien 3. La tige d'extension 7 est placée d'un côté opposé à celui du premier point d'articulation 4. En particulier, la tige d'extension 7 est disposée vers l'arrière du vérin. Avantageusement, le vérin peut être commandé par le déplacement du fluide et actionner ainsi le dispositif.

Le vérin 6 est de préférence disposé sensiblement au niveau du premier point d'articulation 4, en particulier à l'avant du bras de soutien 3.

Le dispositif de contrôle 2 comprend en outre au moins un moyen souple 8 de transmission d'effort de traction coopérant avec l'articulation du bras de soutien 3 sur la structure allongée 5. Le moyen souple 8 est en particulier une corde de mouflage. Alternativement ou en combinaison, le moyen souple peut être une bande souple ou un moyen élastique.

Le moyen souple 8 est fixé sur un premier point d'attache 9 de la structure allongée 5 à une première distance donnée d₁ du premier point d'articulation 4.

Le moyen souple 8 rejoint ensuite une première poulie 10 fixée sur ledit bras de soutien 3, et au moins une deuxième poulie 11 fixée sur la tige d'extension du vérin 6. En particulier, le moyen souple 8 peut passer par au moins une poulie supplémentaire 11a, notamment pour former un mouflage.

Le moyen souple 8 est en outre fixé à un deuxième point d'attache 12 solidaire du bras de soutien 3.

Le montage du moyen souple 8 permet une meilleure stabilité et un contrôle plus aisé de l'articulation du bras de soutien 3 sur la structure allongée 5.

En particulier, le deuxième point d'attache 12 peut être disposé sur le bras de soutien 3. Dans certaines variantes, le moyen de deuxième point d'attache 12a est solidaire de la deuxième poulie 11.

Le dispositif de contrôle 2 comprend en outre une bielle allongée 13a fixée sur la tige 7 du vérin 6. La bielle allongée 13a est de préférence alignée dans la prolongation du vérin 6.

Le débattement du bras de soutien 3 en articulation est de préférence de 35 à 45 degrés et correspond à une longueur spécifique de moyen souple 8 entre le bras de soutien et la structure allongée. Avantageusement, un débattement de 35 à 45 degrés est particulièrement adapté aux dispositifs pour catamarans de haute mer.

De plus, le dispositif de contrôle 2 comprend en outre une nacelle 13 supportant la plateforme. La nacelle 13 comprend une branche horizontale 14 et au moins une branche de projection 15 s'étendant de manière non-parallèle à la branche horizontale 14. La nacelle 13 peut comprendre une branche de projection supérieure 15A et une branche de projection inférieure 15B.

La nacelle 13 est articulée d'une part sur le bras de soutien 3 et d'autre part sur la bielle 13a.

En particulier, la nacelle 13 est articulée sur le bras de soutien 3 en un deuxième point d'articulation 16 à une portion supérieure de ladite branche de projection 15,15A. En outre, la nacelle est articulée sur la bielle allongée 13a en un troisième point d'articulation 17 à une portion inférieure de ladite branche de projection 15, 15B. Le troisième point d'articulation 17 est à une deuxième distance donnée d₂ du deuxième point d'articulation 16.

Selon l'invention, le dispositif est configuré de sorte qu'un rapport de proportionnalité de la première distance donnée d₁ séparant le premier point d'articulation 4 et le premier point d'attache 9, sur la deuxième distance donnée d₂ séparant les deuxième 16 et troisième 17 points d'articulation, est supérieur à 1 et, de préférence, différent de 2.

En particulier, les distances d₁ et d₂ et les longueurs sont évaluées en référence aux projections correspondantes dans un plan d'articulation du bras de soutien 3.

Avantageusement, le dispositif est réalisé avec moins de contraintes car une plus grande variété de bras de soutien 3 et de branches horizontales 14 de plateformes peut être utilisée dès lors que le rapport de proportionnalité requis est respecté.

Ainsi des dispositifs avec un bras de soutien 3 plus long peuvent être réalisés sans nécessairement agrandir l'encombrement horizontal de la plateforme mais plutôt en le diminuant.

Plus précisément, l'inventeur est allé à l'encontre du préjugé technique du brevet FR 2 931 448 B1 selon lequel une distance particulière entre deux points d'articulation du vaisseau devait, par construction, être la moitié de deux points d'articulation de la plateforme dans la configuration spécifique du dispositif.

L'inventeur s'est aperçu de manière surprenante qu'en dépit du fait que les distances modifiées pouvaient altérer le fonctionnement du dispositif en ce que la plateforme ne serait plus maintenue parallèle, ces modifications doivent être faites en maintenant un rapport de proportionnalité tel que défini ci-dessus afin de pouvoir réaliser des dispositifs de taille désirée sans être contraint par les principes de construction du brevet FR 2 931 448 B1.

Le rapport de proportionnalité requis est ainsi un point de repère permettant de déterminer que la plateforme restera horizontale entre les positions haute et basse. En outre, le rapport de proportionnalité permet de prévoir la longueur de débattement du moyen souple 8 spécifique du montage.

Selon une variante rapport de proportionnalité est supérieur à 2. Avantageusement, un rapport de proportionnalité supérieur à 2 permet de prolonger la longueur du bras de soutien 3 tout en diminuant l'encombrement vertical de la nacelle 13, en particulier de la branche de projection 15.

En outre, une augmentation du rapport de proportionnalité permet d'augmenter les bras de levier et donc d'alléger les structures. En particulier on peut réduire les poids en particulier du bras de soutien 3 et/ou de la nacelle.

De plus l'augmentation du rapport de proportionnalité permet pour angle identique, d'agrandir le point de levage et ainsi réduire les efforts dans la structure.

Alternativement, en gardant les mêmes efforts dans la structure, l'augmentation du rapport de proportionnalité permet de réduire la course du vérin.

Selon une variante, le rapport de proportionnalité est un entier naturel non-nul. Par exemple de 3 ou 4. Avantageusement, un tel rapport est plus pratique dans les commandes et le montage des pièces. Par exemple pour une première distance de 3 mètres la deuxième distance serait 1 mètre.

Outre le rapport de proportionnalité, le débattement du bras de soutien 3 et la longueur de moyens souples sont spécifiques au montage du dispositif. Par exemple, pour un vérin de 500 mm, on a un débattement de 1 m de moyen souple. On définit ainsi une longueur de débattement l₁ du moyen souple 8 s'étendant du premier point d'attache 9 à la première poulie 10.

Selon une variante, un deuxième rapport de la longueur de débattement l₁ du moyen souple sur la longueur du corps l₂ du vérin 6 est sensiblement le même rapport de proportionnalité qu'entre les premières et les deuxièmes distances d₁ et d₂. Cet aspect permet un meilleur équilibre entre optimisation de la taille du moyen souple 8 et force à exercer par le biais du vérin 6.

En outre, ce deuxième rapport est de préférence associé à un mouflage réalisé au moyen du moyen souple 8, et le deuxième rapport détermine le nombre de brins du mouflage. Par exemple, pour un deuxième rapport de 3, le moyen souple 8 est réalisé dans un mouflage dit 3 brins. Cette configuration permet à la fois d'optimiser le bras de levier, de limiter les efforts sur la structure du dispositif, et d'avoir de meilleurs points d'appui.

Selon une variante, le rapport de proportionnalité est légèrement biaisé, de préférence légèrement diminué.

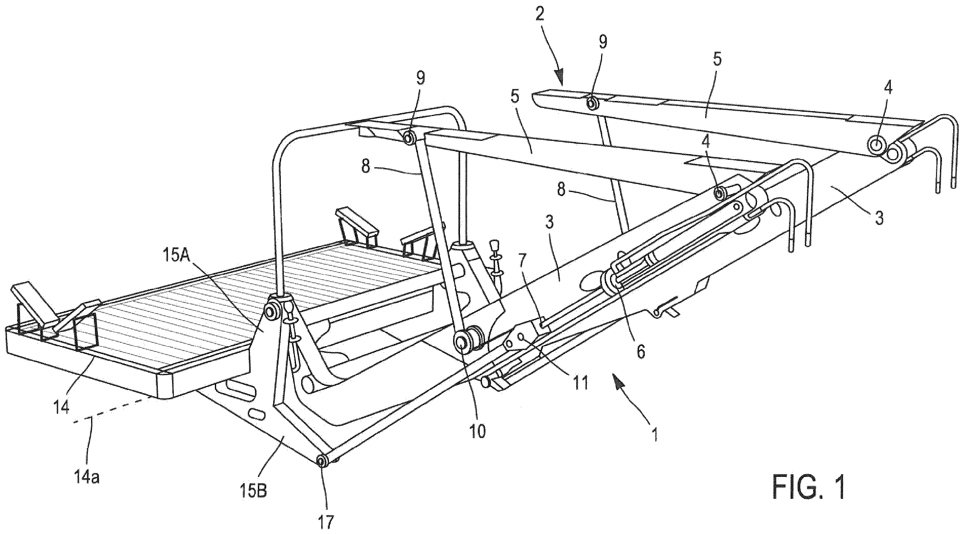

En particulier, la deuxième distance donnée d₂ peut être légèrement augmentée, ou la première distance légèrement diminuée, de sorte que la plateforme soit légèrement inclinée vers l'arrière par exemple à mesure que le dispositif de contrôle passe de la position haute vers la position basse. Cet aspect permet de faciliter la libération de la charge qui est disposée sur la plateforme. Une telle plateforme est illustrée par la référence 14a de la figure 1.

Alternativement ou en combinaison, on peut aussi prévoir que la deuxième distance donnée d₂ puisse être légèrement diminuée, ou la première distance légèrement augmentée, de sorte que la plateforme soit légèrement inclinée vers l'avant, par exemple à mesure que le dispositif de contrôle passe de la position basse vers la position haute.

Selon une variante, le rapport de proportionnalité est biaisé en augmentant légèrement la deuxième distance donnée d₂ entre les deuxième 16 et troisième 17 points d'articulation de 5 à 15%, de préférence d'environ 10%. L'inclinaison en position basse est compensée à mesure que la nacelle 13 est remontée vers la position haute, et la plateforme redevient parfaitement horizontale en position haute.

Au-delà de 15 % l'horizontalité de la plateforme n'est pas suffisante pour retenir la charge sur la plateforme.

L'invention porte également sur un vaisseau comprenant un dispositif de contrôle selon l'invention. En particulier, ce vaisseau est un vaisseau nautique tel qu'un catamaran de haute mer.

L'invention concerne en outre un procédé de fabrication d'un dispositif de contrôle tel que décrit précédemment.

Le procédé comprend une étape de monter au moins un bras de soutien 3 comprenant un premier point d'articulation 4 de sorte que le premier point d'articulation 4 est articulé sur une structure allongée du vaisseau.

Le procédé comprend en outre une étape de monter un vérin à tige d'extension de sorte qu'il est associé à ou logé dans ledit bras de soutien 3 en étant solidaire de celui-ci.

Le procédé comprend en outre une étape de monter au moins un moyen souple de transmission d'effort de traction fixé sur un premier point d'attache 9 de la structure allongée à une première distance donnée d₁ du premier point d'articulation 4.

Cette étape comprend une sous-étape de tendre le moyen souple de transmission de sorte qu'il rejoint une première poulie 10 fixée sur ledit bras de soutien 3, et au moins une deuxième poulie 11 fixée sur la tige d'extension du vérin.

Cette étape comprend en outre une sous-étape de fixer le moyen souple de transmission à un deuxième point d'attache 12 solidaire du bras de soutien 3.

Le procédé comprend en outre une étape de fixer une bielle allongée 13a sur la tige 7 du vérin 6.

Le procédé comprend en outre une étape de monter une nacelle sur le bras de soutien 3 et sur la bielle allongée 13a. La nacelle supporte la plateforme et comprenant une branche horizontale 14 et au moins une branche de projection 15, 15A, 15B s'étendant de manière non-parallèle à la branche horizontale 14.

Dans cette étape, la nacelle est montée de sorte que la nacelle est articulée d'une part sur le bras de soutien 3 en un deuxième point d'articulation 16 à une portion supérieure de ladite branche de projection, et d'autre part sur la bielle allongée 13a en un troisième point d'articulation 17 à une portion inférieure de ladite branche de projection, le troisième point d'articulation 17 étant à une deuxième distance donnée d₂ du deuxième point d'articulation 16.

Lors de la fabrication du dispositif, le bras de soutien 3, le vérin et la nacelle, de préférence la branche de projection, sont sélectionnés de sorte qu'un rapport de proportionnalité de la première distance donnée d₁ séparant le premier point d'attache 9 et le premier point d'articulation 4, sur la deuxième distance donnée d₂ séparant les deuxième 16 et troisième 17 points d'articulation, est supérieur à 1 et différent de 2.

## Revendications

1. Vaisseau comprenant d'un dispositif de contrôle (1) pour vaisseau (2), configuré pour déplacer verticalement une plateforme portant une charge, de préférence une embarcation, en maintenant la plateforme sensiblement horizontale, le dispositif comprenant
- au moins un bras de soutien (3) comprenant un premier point d'articulation (4) configuré pour être articulé sur une structure allongée (5) du vaisseau (2),
- un vérin (6) à tige d'extension (7) associé à ou logé dans ledit bras de soutien (3) en étant solidaire de celui-ci,
- au moins un moyen souple (8) de transmission d'effort de traction fixé sur un premier point d'attache (9) de la structure allongée à une première distance donnée (d₁) du premier point d'articulation (4), le moyen souple de transmission rejoignant une première poulie (10) fixée sur ledit bras de soutien (3), et au moins une deuxième poulie (11) fixée sur la tige d'extension du vérin, le moyen souple (8) de transmission étant fixé à un deuxième point d'attache (12) solidaire du bras de soutien (3),
- une bielle allongée (13a) fixée sur la tige (7) du vérin (6),
- une nacelle (13) supportant la plateforme et comprenant une branche horizontale (14) et au moins une branche de projection (15A, 15B ; 15) s'étendant de manière non-parallèle à la branche horizontale (14),
la nacelle (13) étant articulée d'une part sur le bras de soutien (3) en un deuxième point d'articulation (16) à une portion supérieure de ladite branche de projection (15A, 15B ; 15), et d'autre part sur la bielle allongée (13a) en un troisième point d'articulation (17) à une portion inférieure de ladite branche de projection (15A, 15B ; 15),
le troisième point d'articulation (17) étant à une deuxième distance donnée (d₂) du deuxième point d'articulation (16),
**caractérisé en ce que** le dispositif est configuré de sorte qu'un rapport de proportionnalité de la première distance donnée (d₁) séparant le premier point d'attache (9) et le premier point d'articulation (4), sur la deuxième distance donnée (d₂) séparant les deuxième (16) et troisième (17) points d'articulation, est un entier naturel non-nul qui est supérieur à 2.

2. Vaisseau comprenant un dispositif de contrôle selon la revendication 1, dans lequel le rapport de proportionnalité est de 3 ou 4.

3. Vaisseau comprenant d'un dispositif de contrôle selon l'une des revendications précédentes, dans lequel le moyen souple de transmission d'effort est une corde de mouflage.

4. Vaisseau comprenant d'un dispositif de contrôle selon l'une des revendications précédentes, dans lequel un deuxième rapport de la longueur de débattement (l₁) du moyen souple (8) sur la longueur du corps (l₂) du vérin (6) est sensiblement le même rapport de proportionnalité qu'entre les première et deuxième distances (d₁, d₂).

5. Procédé de fabrication d'un vaisseau comprenant un dispositif de contrôle selon l'une des revendications précédentes.

## Patentansprüche

1. Schiff, umfassend eine Steuervorrichtung (1) für ein Schiff (2), die konfiguriert ist, um eine lasttragende Plattform, vorzugsweise ein Boot, vertikal zu bewegen, wobei die Plattform im Wesentlichen horizontal gehalten wird, wobei die Vorrichtung Folgendes umfasst:
- mindestens einen Tragarm (3), der einen ersten Gelenkpunkt (4) aufweist, der so konfiguriert ist, dass er an einer länglichen Struktur (5) des Schiffs (2) angelenkt werden kann,
- einen Zylinder (6) mit einer Verlängerungsstange (7), die mit dem Tragarm (3) verbunden oder in diesem untergebracht und mit diesem einstückig ausgebildet ist,
- mindestens ein flexibles Zugkraftübertragungsmittel (8), das an einem ersten Befestigungspunkt (9) der länglichen Struktur in einem ersten gegebenen Abstand (d₁) von dem ersten Gelenkpunkt (4) befestigt ist, wobei das flexible Übertragungsmittel eine erste Riemenscheibe (10), die an dem Tragarm (3) befestigt ist, und mindestens eine zweite Riemenscheibe (11), die an der Verlängerungsstange des Zylinders befestigt ist, verbindet, wobei das flexible Übertragungsmittel (8) an einem zweiten Befestigungspunkt (12) befestigt ist, der fest mit dem Tragarm (3) verbunden ist,
- eine längliche Pleuelstange (13a), die an der Stange (7) des Zylinders (6) befestigt ist,
- einen Korb (13), der die Plattform trägt und einen horizontalen Zweig (14) und mindestens einen Projektionszweig (15A, 15B; 15) aufweist, der sich nicht parallel zu dem horizontalen Zweig (14) erstreckt,
wobei der Korb (13) einerseits mit dem Tragarm (3) an einem zweiten Gelenkpunkt (16) an einem oberen Abschnitt des Projektionszweiges (15A, 15B; 15) und andererseits mit der länglichen Verbindungsstange (13a) an einem dritten Gelenkpunkt (17) an einem unteren Abschnitt des Projektionszweiges (15A, 15B; 15) gelenkig verbunden ist,
wobei der dritte Gelenkpunkt (17) in einem zweiten vorgegebenen Abstand (d₂) vom zweiten Gelenkpunkt (16) liegt,
**dadurch gekennzeichnet, dass** die Vorrichtung so konfiguriert ist, dass ein proportionales Verhältnis des ersten gegebenen Abstands (d₁) zwischen dem ersten Befestigungspunkt (9) und dem ersten Gelenkpunkt (4) zu dem zweiten gegebenen Abstand (d₂) zwischen dem zweiten (16) und dritten (17) Gelenkpunkt eine natürliche Zahl ungleich Null ist, die größer als 2 ist.

2. Schiff, umfassend eine Steuervorrichtung nach Anspruch 1, wobei das proportionale Verhältnis 3 oder 4 beträgt.

3. Schiff, umfassend eine Steuervorrichtung nach einem der vorstehenden Ansprüche, wobei das flexible Mittel zur Kraftübertragung ein Zugseil ist.

4. Schiff, umfassend eine Steuervorrichtung nach einem der vorhergehenden Ansprüche, wobei ein zweites Verhältnis der Länge des Weges (l₁) des flexiblen Mittels (8) zur Länge des Körpers (l₂) des Zylinders (6) im Wesentlichen das gleiche proportionale Verhältnis wie zwischen dem ersten und dem zweiten Abstand (d₁, d₂) ist.

5. Verfahren zur Herstellung eines Schiffes, umfassend eine Steuervorrichtung nach einem der vorhergehenden Ansprüche.

## Claims

1. Vessel comprising a control device (1) for a vessel (2), configured to vertically move a platform carrying a load, preferably a craft, while keeping the platform substantially horizontal, the device comprising:
- at least one support arm (3) that comprises a first pivot point (4) and is configured to be pivotably connected to an elongate structure (5) of the vessel (2);
- a cylinder (6) that has an extension rod (7), is associated with or housed within said support arm (3) and is secured thereto;
- at least one flexible means (8) for transmitting tensile force, which means is fixed to a first attachment point (9) of the elongate structure at a first given distance (d₁) from the first pivot point (4), the flexible transmission means joining a first pulley (10) that is fixed to said support arm (3) and at least one second pulley (11) that is fixed to the extension rod of the cylinder, the flexible transmission means (8) being fixed to a second attachment point (12) that is secured to the support arm (3);
- an elongate connecting rod (13a) that is fixed to the rod (7) of the cylinder (6);
- a carrier (13) supporting the platform and comprising a horizontal leg (14) and at least one projection leg (15A, 15B; 15) extending in a non-parallel manner in relation to the horizontal leg (14);
the carrier (13) being pivotably connected to the support arm (3) at a second pivot point (16) at an upper portion of said projection leg (15A, 15B; 15), and to the elongate connecting rod (13a) at a third pivot point (17) at a lower portion of said projection leg (15A, 15B; 15),
the third pivot point (17) being at a second given distance (d₂) from the second pivot point (16), **characterized in that** the device is configured such that a proportionality ratio of the first given distance (d₁) which separates the first attachment point (9) and the first pivot point (4) to the second given distance (d₂) which separates the second pivot point (16) and the third pivot point (17) is a non-zero natural integer which is greater than 2.

2. Vessel comprising a control device according to claim 1, wherein the proportionality ratio is 3 or 4.

3. Vessel comprising a control device according to either of the preceding claims, wherein the flexible force transmission means is a block-and-tackle rope.

4. Vessel comprising a control device according to any of the preceding claims, wherein a second ratio of the length of travel (l₁) of the flexible means (8) to the length of the body (l₂) of the cylinder (6) is substantially the same proportionality ratio as between the first distance and the second distance (d₁, d₂).

5. Method for producing a vessel comprising a control device according to any of the preceding claims.
